# EUROPÄISCHE PATENTANMELDUNG

(11) **EP 4 461 504 A1**
(43) Veröffentlichungstag der Anmeldung: **13.11.2024**
(21) Anmeldenummer: 23173086.2
(22) Anmeldetag: 12.05.2023
(51) Int. Cl.: B29C 45/14, A47K 13/30, B29C 45/16, B29C 45/26

(54) **HERSTELLUNGSVERFAHREN FÜR EINEN WC-SITZ**

(71) Anmelder: Geberit International AG, 8645 Jona (CH)
(72) Erfinder: Gmür, David, 8645 Jona (CH); Karl, Matthias, 8645 Jona (CH)
(74) Vertreter: König Szynka Tilmann von Renesse Patentanwälte Partnerschaft mbB München

(57) **Zusammenfassung**

Die Erfindung betrifft die Herstellung eines WC-Sitzes durch Einbringen einer Sitzheizung 2 in eine aus zwei Formteilen 1 und 3 gebildete erste Form, Füllen dieser Form mit einem fließfähigen Material und Verfestigen des Materials zur Herstellung eines Verbundes aus der Sitzheizung und diesem Material in der Form.

## Beschreibung

Die vorliegende Erfindung bezieht sich auf die Herstellung eines WC-Sitzes und daneben auch auf die Herstellung einer zusätzlich einen WC-Deckel aufweisenden WC-Sitzgarnitur sowie auf die Herstellung eines damit ausgestatteten WCs.

Wasserklosetts (WCs) weisen regelmäßig einen WC-Körper mit einer Schüssel und Einrichtungen für deren Wasserspülung sowie einen an diesem WC-Körper montierten WC-Sitz auf. Typischerweise ist der WC-Sitz an einem Ende gelenkig und insoweit klappbar an dem WC-Körper montiert und typischerweise ist zusätzlich auch noch ein WC-Deckel vorgesehen. Der WC-Sitz dient dem Benutzer zum Sitzen über der Schüssel während der Benutzung und weist dementsprechend über der Schüssel eine Öffnung auf (wobei er nicht zwingend um diese herum geschlossen sein muss), wohingegen der WC-Deckel die Schüssel nach oben abdecken soll und insoweit typischerweise über dem WC-Sitz und typischerweise seinerseits ebenfalls klappbar vorgesehen ist. Zur Montage an einem WC-Körper vorgesehene Sets aus aneinander befestigtem WC-Deckel und WC-Sitz werden auch als WC-Garnitur bezeichnet.

In den letzten Jahren gibt es zunehmend WCs mit weiteren technischen Funktionen, z. B. zur Unterleibsreinigung nach der Benutzung oder Geruchsabsaugung und daneben auch Heizungen für den WC-Sitz. Diese funktionieren durch elektrische Widerstandsheizung oder, seltener, durch die Erwärmung einer Heizschicht in dem WC-Sitz mittels Induktion. In beiden Fällen ist in dem WC-Sitz eine Sitzheizung integriert, also der elektrische Heizwiderstand oder die induktiv erwärmbare Schicht, wobei natürlich außerhalb des WC-Sitzes weitere Funktionselemente zur Versorgung, Steuerung, insbesondere Regelung, oder als Induktionsquellen vorgesehen sein können.

Damit stellt sich in der Praxis insbesondere die Frage der Integration der Sitzheizung in dem WC-Sitz, also insbesondere des angesprochenen Heizwiderstands oder einer induktiv erwärmbaren Schicht, während der Sitzherstellung. Wenn in der üblichen Form der WC-Sitz aus mehreren Schalenteilen, bspw. einer unteren und einer oberen Halbschale, sowie einer Füllung dazwischen zusammengesetzt wird, kann die Sitzheizung zwischen diese Schalenteile gelegt werden.

Der vorliegenden Erfindung liegt das Problem zugrunde, ein im Hinblick auf einen heizbaren WC-Sitz vorteilhaftes Herstellungsverfahren anzugeben.

Das Problem wird erfindungsgemäß durch ein Herstellungsverfahren nach Anspruch 1 gelöst. Die Erfindung bezieht sich daneben aber auch auf eine entsprechende Herstellung einer WC-Sitzgarnitur nach Anspruch 10 und eines WCs nach Anspruch 11.

Gemäß Anspruch 1 ist vorgesehen, die Sitzheizung in eine zur Herstellung zumindest eines Teils des WC-Sitzes vorgesehene ("erste") Form einzubringen, bevor diese mit dem für die Herstellung herangezogenen Material gefüllt wird. Dieses Material verfestigt sich in der Form, nachdem es in fließfähigem Zustand auf mindestens einer Seite der Sitzheizung eingebracht wurde. In der Form kommt es zu einem Kontakt zwischen dem anfangs noch fließfähigen Material und der Sitzheizung, sodass ein Verbund mit einer guten Haftung dazwischen gebildet werden kann. Insbesondere ist vorzugsweise vorgesehen, dass das fließfähige Material die Sitzheizung großflächig, z. B. im Wesentlichen auf der gesamten Seite (von insgesamt zwei Seiten der Sitzheizung) benetzt. Das gilt insbesondere dann, wenn die Sitzheizung eine flächige Form hat.

Natürlich können weitere Verfahrensschritte folgen, was aber nicht unbedingt notwendig ist. Darauf wird später noch näher eingegangen.

Die in die Form einzubringende Sitzheizung hat vorteilhafterweise mindestens insoweit eine flächige Gestalt, als sie auf einer Trägerfolie gehalten ist (die in dieser Hinsicht also quasi als Teil der Sitzheizung betrachtet wird). Z. B. kann es sich um auf einer Kunststofffolie aufgeklebte, aufgedruckte oder sonst wie befestigte Drahtstrukturen oder Leiterbahnen handeln. Die Sitzheizung kann auf der Trägerfolie z. B. auch lithographisch definiert und freigeätzt werden.

Außerdem kann die Sitzheizung an sich eher eine flächige Schichtstruktur als eine Leiterbahn- oder Drahtstruktur aufweisen, etwa weil sie aus einem leitfähigen Polymer, einer leitfähigen Kohlenstoffschicht oder ähnlichem aufgebaut ist. Bevorzugt ist allerdings eine metallische Draht- oder Leiterbahnstruktur auf einer Kunststofffolie, insbesondere einer ABS-Folie.

Vorzugsweise verbleibt die Trägerfolie in der ersten Form und wird damit Teil des Verbundes. Sie kann damit dazu beitragen, dass sich das oben erwähnte fließfähige Material auf einer Seite der Sitzheizung flächig anlegt, aber z. B. nicht auf die andere Seite durchdringt. Außerdem erleichtert die Trägerfolie den Umgang mit der Sitzheizung vor und bei dem Einlegen in die Form.

Gemäß einer weiteren Ausgestaltung ist ein elektrischer Heizleiter der Sitzheizung in Bezug auf die endgültige Montageposition des WC-Sitzes auf einer unteren Seite der Trägerfolie vorgesehen. "Unten" bezieht sich hier also nicht auf Situationen während der Herstellung, sondern auf die Situation bei auf dem WC-Körper montiertem WC-Sitz (im heruntergeklappten Zustand). Damit kann die Trägerfolie z. B. zur elektrischen Isolierung verwendet werden. Bspw. könnte die Trägerfolie die endgültige Sitzoberfläche bilden oder nachträglich nur noch mit einer für die elektrische Isolierung unzureichenden Schicht bedeckt werden.

Stattdessen oder außerdem kann die Trägerfolie verhindern, dass sich Strukturen des Heizleiters auf der endgültigen Sitzoberfläche abzeichnen, bspw. weil sie sich bei einem nachträglichen Beschichtungsverfahren nicht hinreichend egalisieren oder einbetten lassen. Während des oben beschriebenen Herstellvorgangs kann aber das in die erste Form eingebrachte fließfähige Material um Strukturen des elektrischen Heizleiters mit einer gewissen Dicke herumfließen und insoweit diese Strukturen in sich aufnehmen.

Das in die erste Form eingebrachte fließfähige Material kann infolge eines Drucks, etwa beim Spritzgießen, die Sitzheizung, insbesondere einschließlich der Trägerfolie, verformen und dabei ein Stück weit oder ganz in Richtung Werkzeugwand drücken. Dabei kann etwa eine ursprünglich im Wesentlichen flache und ebene Form in einer gekrümmte Form überführt werden und/oder kann die Sitzheizung durch die Verformung nah an eine Wand der Form und/oder die zukünftige obere Oberfläche des WC-Sitzes gebracht werden. Wenn in diesem Zusammenhang Wärme angewendet wird, z. B. beim Spritzgießen, kann dies natürlich die Verformung der Sitzheizung, vor allem der Trägerfolie, erleichtern. Insoweit muss die Sitzheizung bei solchen Anwendungen nicht zwingend in der endgültigen gewünschten Position vorfixiert werden, sondern kann z. B. in einer vorläufigen Lage vorfixiert werden und aus dieser vorläufigen Lage dann wie geschildert in die endgültige Lage gebracht werden, insbesondere an durch die Vorfixierung nicht direkt betroffenen Stellen, vgl. das Ausführungsbeispiel.

Z. B. können Teile der Sitzheizung bzw. der Trägerfolie durch Klemmen zwischen zwei Teilen der ersten Form fixiert werden, etwa durch Kontaktstellen an der Sitzheizung berührende Stifte, die dann an diesen Stellen auch für eine spätere Zugänglichkeit der Kontaktstellen sorgen. Zusätzlich oder alternativ könnten die Sitzheizung bzw. die Trägerfolie auch durch eine Vakuumeinrichtung vorfixiert werden, wobei diese vorzugsweise auf der Seite liegt, zu der sich die Sitzheizung dann im Folgenden verformt. Diese Seite wird bei einer bevorzugten Ausgestaltung (vgl. weiter unten) später noch beschichtet, so dass etwaige Spuren von Vakuumkanälen nicht wesentlich sein müssen.

Eine Position nahe der oberen Oberfläche verbessert die energetische Effizienz der Sitzheizung im Hinblick auf die gewünschte Oberflächentemperatur und den Energieeinsatz und verbessert außerdem das Ansprechverhalten nach dem Einschalten.

Dabei muss nicht unbedingt eine wesentliche Distanz überbrückt werden; es kann schon vorteilhaft sein, wenn sich die Sitzheizung z. B. mit der Trägerfolie an einer gewünschten Außenfläche der ersten Form unter Druck und damit definiert anliegt, was durch einfaches Einlegen in die Form (ggf. bei Positionierung in den beiden übrigen Raumrichtungen) nicht ohne weiteres zuverlässig gewährleistet werden kann.

Das bislang in allgemeinen Begriffen beschriebene Füllen der ersten Form mit fließfähigem Material und Verfestigen des Materials kann unterschiedlichen Technologien entsprechen, insbesondere dem bereits erwähnten Spritzgießen, das vorliegend auch bevorzugt ist und sich auf das Einbringen von thermoplastischem und durch Erwärmung verflüssigtem Material bezieht. Allerdings sind auch Verfahren mit duroplastischen Werkstoffen denkbar, die man als Pressen oder auch als Gießen bezeichnen könnte.

Das Spritzgießen mit thermoplastischen Materialien ermöglicht gegenüber z. B. druckplastischen Materialien die präzisere Herstellung filigraner Formen und schnellere Herstellungsprozesse. Insbesondere ist keine oder weniger Nacharbeit (z. B. an Trenngraten) erforderlich, wobei solche Nacharbeit nicht nur wegen des Arbeitsaufwandes sondern auch wegen der unvermeidlichen Oberflächenschädigung nachteilig ist. Allerdings bedingt das Spritzgießen vergleichsweise teure Werkzeuge und Maschinen.

Das bevorzugte thermoplastische Material ist ASA. Dieses weist insbesondere eine erhebliche chemische Ähnlichkeit zu dem bereits erwähnten bevorzugten Trägerfolienwerkstoff ABS auf, sodass sich zwischen den beiden Materialien eine sehr gute Haftung und ein stabiler Verbund ergibt. Wenn die Sitzheizung selbst (sei sie nun leiterbahn- oder drahtförmig oder flächig) diesen Kontakt nicht behindert, entweder indem sie durchlässig ist oder auf der anderen Seite angeordnet, kann es in diesem Zusammenhang dann auf die Haftung zwischen dem Material des Heizleiters selbst (oder einer Induktionsschicht) und dem fließfähig eingebrachten Material nicht oder weniger ankommen.

Wenn die Trägerfolie in Bezug auf den fertigen WC-Sitz außerhalb der Sitzheizung liegt, kann sie in einer besonders einfachen Ausgestaltung die fertige Oberfläche des WC-Sitzes bilden. Vorzugsweise wird sie allerdings nachträglich noch beschichtet, und zwar vorzugsweise durch Aufbringen eines weiteren fließfähigen Materials in einer "zweiten" Form. Hier ist von der zweiten Form in begrifflicher Abgrenzung zu der bisher erwähnten (daher als erste Form bezeichneten) Form die Rede. Diese zweite Form grenzt vorzugsweise in Bezug auf das in die erste Form eingebrachte Material an der anderen Seite an die Sitzheizung oder Trägerfolie an, wobei dies nicht gleichzeitig mit dem Prozess in der ersten Form der Fall sein muss und insbesondere die zweite Form überhaupt erst nach der Verfestigung des in die erste Form eingebrachten Materials gebildet werden kann.

(Auch) die zweite Form ist vorzugsweise geschlossen, wobei im Prinzip aber auch eine offene Form zum Beispiel zum Aufgießen des fließfähigen Materials benutzt werden kann. Auch kann die zweite Form einen zweiten Spritzgussschritt bedeuten. Bevorzugt wird allerdings hier kein thermoplastisches Material benutzt sondern die Sitzheizung in der zweiten Form mit einem sich aufgrund chemischer Prozesse verfestigenden Material überflutet.

Das Überfluten hat gegenüber der Verwendung einer Trägerfolie als Sitzoberfläche oder auch dem Spritzgießen verschiedene mögliche Vorteile. Z. B. können für das Überfluten bestimmte für eine Folie weniger geeignete Materialien eingesetzt werden, die aber als WC-Sitzoberfläche besonders vorteilhaft sind. Erfindungsgemäß ist zum einen Polyurea bevorzugt, und zwar wegen seiner Langzeitbeständigkeit und Unempfindlichkeit gegen Verfärbungen (etwa durch Textilfarben, Verschmutzungen etc.). Andererseits kann aber auch Polyurethan eine günstige Wahl sein, die ebenfalls bevorzugt ist. Grundsätzlich können beim Überfluten im Vergleich zu der Trägerfolie als Oberfläche deutlich bessere Übergänge des Überflutungsmaterials zu dem anderen Material (insbesondere Spritzgussmaterial) hergestellt werden und Schwierigkeiten durch einen Folienrand vermieden werden. Die genannten Werkstoffe sind ein Zweikomponentenwerkstoffe (ggf. zuzüglich Farbstoff), die in der zweiten Form aushärten können.

Die Materialstärke des Überflutungsmaterials (also senkrecht zur Oberfläche) liegt vorzugsweise nicht über 2 mm, besonders bevorzugterweise nicht über 1,8 mm, 1,6 mm, 1,4 mm, 1,2 mm oder sogar nicht über 1mm. Andererseits sind folgende Untergrenzen für die Materialstärke bevorzugt: 0,2 mm, 0,3 mm, 0,4 mm und schließlich 0,5 mm.

Für das Zuführen in die zweite Form kann das fließfähige Material durch einen Einströmkanal geführt werden, der in Bezug auf den fertigen WC-Sitz im heruntergeklappten montierten Zustand und in Bezug auf einen Querschnitt (quer zur Verlaufsrichtung des Sitzes an dieser Stelle, also mit minimalem Querschnitt) durch den Sitzring seitlich liegt, vorzugsweise an einem Ende, etwa dem unteren Rand, des überfluteten Bereichs. Insbesondere liegt eine solche Stelle vorzugsweise außerdem eher vorne oder hinten, also in Bezug auf die typische mittlere Symmetrieebene des WC-Sitzes in dieser Ebene. Vom Ausführungsbeispiel gilt das für eine Stelle am hintersten Ende des Sitzes. An dieser Stelle sind etwaige Spuren besonders wenig auffällig. Ähnliches gilt für die beim Überfluten vorteilhaften Überlaufkanäle, vgl. das Ausführungsbeispiel.

Der Zuströmkanal für die erste Form kann an einer Unterseite (wieder in Bezug auf die montierte heruntergeklappte Position des WC-Sitzes) realisiert werden. Diese Position ist wenig auffällig.

Im Prinzip können die erste Form und die zweite Form grundverschieden sein, wobei dann der der erste Form entnommene Verbund in die zweite Form eingelegt werden muss. Vorzugsweise teilen jedoch die beiden Formen einen Formteil, und zwar insbesondere den diejenigen, der an das in der ersten Form eingefüllte Material angrenzt. Dann wird sozusagen auf der anderen Seite ein Formteil bewegt oder ausgetauscht und damit insbesondere ein zuvor nicht vorhandener Hohlraum für das Überfluten geschaffen.

Erfindungsgemäß kann der in der beschriebenen Weise hergestellte WC-Sitz mit einem WC-Deckel verbunden werden. Der WC-Deckel kann z. B. ebenfalls durch Spritzguss hergestellt werden. Typischerweise werden beide Teile gelenkig verbunden, wobei Drehdämpfer eingesetzt werden können. Damit wird eine WC-Sitzgarnitur hergestellt.

Außerdem kann mit dem erfindungsgemäßen WC-Sitz auch ein WC hergestellt werden, entweder indem der WC-Sitz für sich an einem WC-Körper montiert wird (an welchem ggf. unabhängig von dem WC-Sitz auch ein WC-Deckel montiert sein kann) oder indem die gerade erwähnte WC-Sitzgarnitur an dem WC-Körper angebracht wird.

Die Steuerung und/oder Versorgung der Sitzheizung kann natürlich aus dem WC-Körper oder aus einem Gehäuseaufbau darauf erfolgen, wobei Leitungsverbindungen (im klassischen Sinn der galvanischen Kontakte) genauso denkbar sind wie "schnurlose" Techniken, etwa durch Induktion. Steuerungselemente können auch teils in dem WC-Sitz und teils in der beschriebenen Weise untergebracht sein. Außerdem kann der WC-Sitz natürlich auch eine Batterie, insbesondere wiederaufladbar, einen Kondensator oder Ähnliches zur Speicherung elektrischer Energie aufweisen.

Im Folgenden wird die Erfindung anhand eines Ausführungsbeispiels näher erläutert, wobei die einzelnen Merkmale im Rahmen der Ansprüche auch in anderer Kombination erfindungswesentlich sein können und auch weiterhin nicht im Einzelnen zwischen den unterschiedlichen Anspruchskategorien unterschieden wird.

Die Figuren 1-7 zeigen in einer schematisierten Schnittdarstellung die erfindungsgemäße Herstellung eines WC-Sitzes, und zwar in chronologischer Folge;

Figur 8 zeigt eine Draufsicht auf einen fertigen WC-Sitz als Ergebnis eines solchen Herstellungsverfahrens.

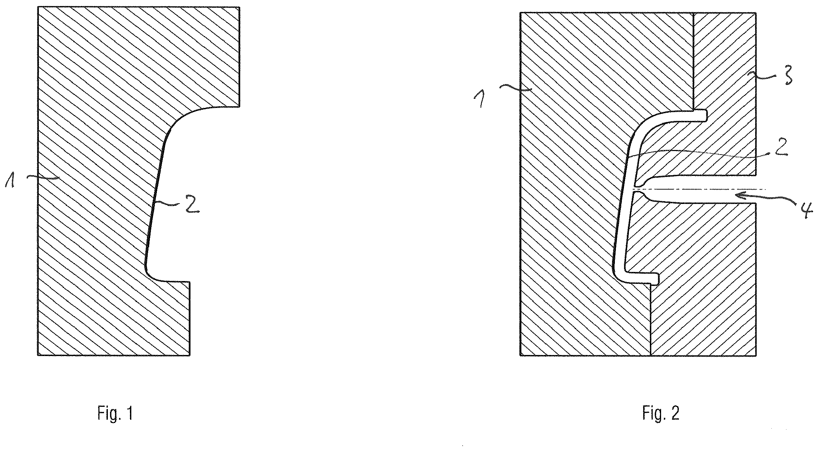

In Figur 1 ist mit 1 ein Formteil einer Spritzgussmaschine dargestellt, wobei in das Formteil und konkret eine darin ausgebildete Hohlform eine Sitzheizung 2 eingelegt worden ist. Dieses Einlegen kann manuell, aber auch maschinell, etwa mit einer Vakuumeinrichtung an einem Roboterarm, erfolgen.

Die Sitzheizung 2 besteht konkret aus einer Kunststofffolie, nämlich aus ABS, die auf der in Figur 1 rechten Seite eine Widerstandsheizung aus Kupferdraht aufweist, wobei diese Widerstandsheizung aufgeklebt sein kann, aber zum Beispiel auch aus einer zuvor flächig auf der ABS-Folie abgeschiedenen Schicht lithografisch strukturiert worden sein kann.

Die Sitzheizung 2 ragt in einer in der schematischen Figur 1 nicht erkennbaren Weise unten etwas über die Hohlform hinaus, um dort im nächsten, in Figur 2 dargestellten Schritt eingeklemmt zu werden. In Figur 2 erkennt man nämlich, dass ein zweiter Formteil 3 von rechts auf den in Figur 1 bereits sichtbaren Formteil 1 aufgesetzt worden ist und damit eine erste Spritzgussform 1, 3 definiert worden ist. Der zweite Formteil 3 enthält einen in Figur 2 erkennbaren Zuströmkanal für das erwärmte thermoplastische Material, nämlich ASA, zum Hinterspritzen der Sitzheizung 2. Durch das Zusammenfügen der beiden Formteile 1 und 3 wird die in Figur 1 bereits in ihrem unteren Rand leicht vorfixierte Sitzheizung 2 in nicht dargestellter Weise zwischen den beiden Formteilen 1 und 3 eingeklemmt und insoweit dort gehalten. Im Übrigen weist die Sitzheizung 2 eine ungefähr zur Innenwand des Formteil 1 passende Form auf, ist aber noch nicht vollständig lagedefiniert.

Alternativ könnte die Sitzheizung 2 zum Beispiel in diesem unteren Bereich oder auch sonst auf ihrer linken Seite in den Figuren 1 und 2 durch eine Vakuumeinrichtung vorfixiert werden. Auslässe von Vakuumkanälen stören, wenn sie nicht zu groß sind, den Spritzgussvorgang wegen der Trägerfolie der Sitzheizung 2 nicht.

Durch das Einbringen des fließfähigen ASA in die erste Spritzgussform 1, 3, das in Figur 2 schon im Ansatz dargestellt ist, legt sich das erwärmte ASA von rechts an die in der ersten Form links angeordnete Sitzheizung 2 an und drückt diese Sitzheizung 2 zunehmend gegen die linke Außenwand der ersten Form 1, 3. Zusammen mit der bereits erwähnten Klemmung kommt es also zu einer Lagefixierung, wobei das Spritzgussmaterial für eine gute flächige Anpressung der Sitzheizung 2 an die Außenwand der ersten Form sorgt und damit die Positionierung verbessert und sicherstellt. Außerdem legt sich das erwärmte fließfähige ASA um die Kupferleiter auf der ABS-Trägerfolie der Sitzheizung 2 herum und bettet diese zusammen mit der Trägerfolie ein. Schließlich bedeckt das Spritzgussmaterial die gesamte rechte (bzw. bezüglich des unteren Teils der Sitzheizung 2 obere) Seite der Sitzheizung 2, wobei der oberste Bereich der in dem dargestellten Schnitt ungefähr U-förmigen ersten Form von der Sitzheizung 2 nicht erfasst wird.

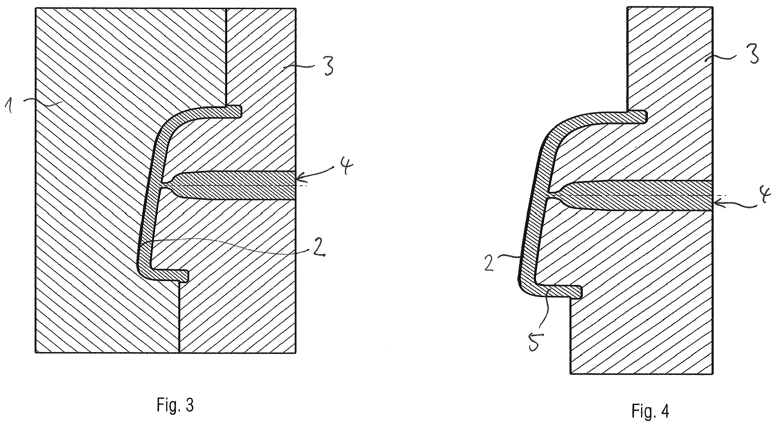

In Figur 3 ist der Zustand der noch geschlossenen ersten Form 1, 3 bei vollständiger Füllung dargestellt.

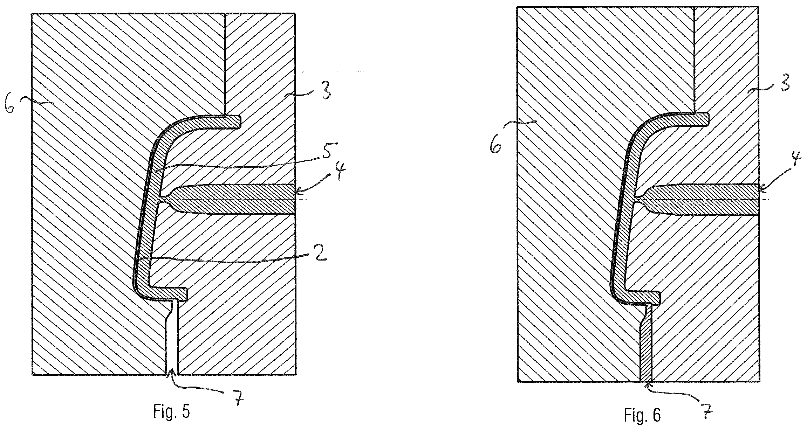

Figur 4 zeigt den Zustand nach dem Öffnen der ersten Form durch Wegbewegen des Formteils 1 von dem Formteil 3. In diesem Zustand bleiben die Sitzheizung 2 und die nach dem Erstarren des ASA hergestellte untere Schale 5 des zukünftigen WC-Sitzes an ihrer Stelle am Formteil 3. Im Folgenden wird von links gemäß Figur 5 ein dritter Formteil 6 heranbewegt, welcher zusammen mit der Sitzheizung 2 bzw., wo sie nicht mehr existiert, der unteren Schale 5 einen Hohlraum für ein Überfluten bildet. Im Folgenden wird die Kombination der beiden Formteile 3 und 6 als zweite Form bezeichnet, wobei die zuvor geformte untere Schale 5 mit der Sitzheizung 2 darauf den tatsächlichen Hohlraum für das Überfluten verkleinert und begrenzt. Dabei wird durch einen im unteren Teil der Figur 5 symbolisch dargestellten Einlaufkanal 7 Polyurea (oder auch Polyurethan) in fließfähigen Zustand eingebracht, bis die zweite Form 3, 6 vollständig gefüllt ist und das Polyurea-Material durch nicht dargestellte Überlaufkanäle im oberen Bereich austritt.

In Figur 6 ist die zweite Form 3, 6 dementsprechend gefüllt und in Figur 5 noch nicht. Man erkennt im Vergleich auch, dass die zu füllende Kavität vergleichsweise sehr klein ist, weil sie nur eine geringe Materialstärke im Bereich zwischen 0,5 bis 1 mm bilden soll.

Nach dem Erstarren des Polyurea-Materials durch eine chemische Reaktion darin (also nach dem chemischen Aushärten) kann die zweite Form 3, 6 geöffnet werden und die nunmehr hergestellte Kombination im Sinn eines Schichtverbunds aus der unteren Schale 5, der Sitzheizung 2 (also Kupfer-Widerstandsheizung auf Trägerfolie) und darauf bzw. links daneben der Polyurea -Überflutungsschicht 8, entfernt werden.

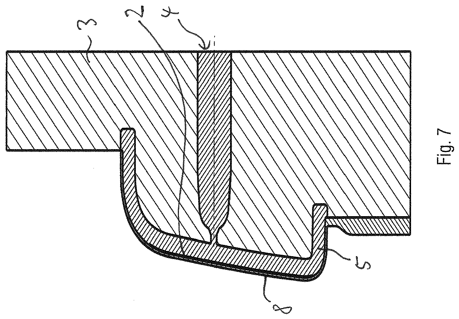

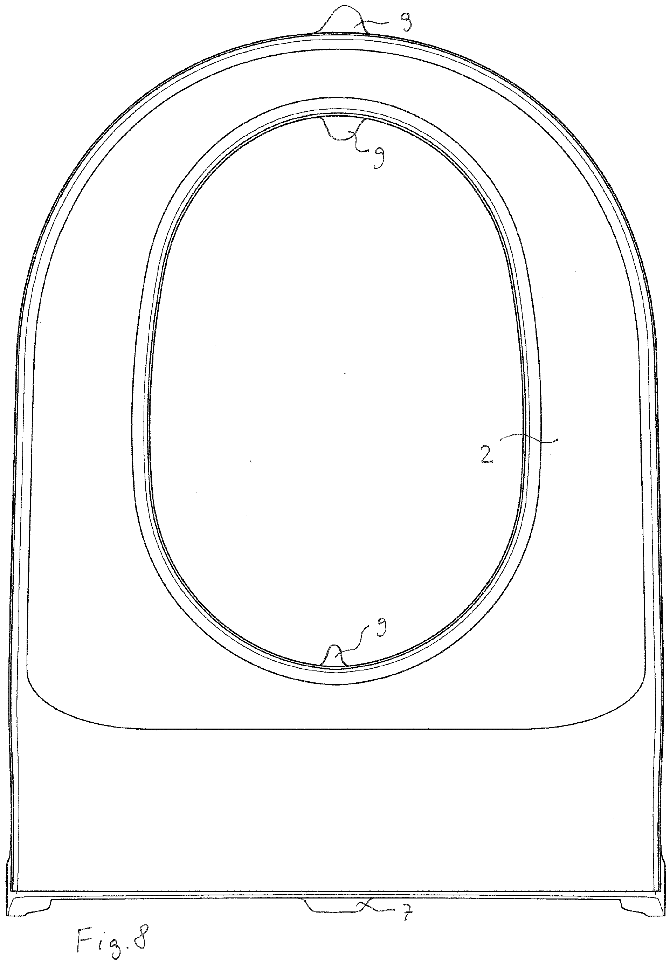

Das fertige Erzeugnis zeigt Figur 8 in einer realistischeren Draufsicht, wobei der Einlaufkanal mit dem schon verwendeten Bezugszeichen 7 bezeichnet ist, hier aber in Bezug auf die Position eines WC-Benutzers eine Lage ganz hinten und rückseitig am WC-Sitz hat. 9 bezeichnet drei Überlaufkanäle, die in der Benutzungslage des WC-Sitzes unten an einer Kante liegen. 2 bezeichnet die Sitzheizung. Es versteht sich von selbst, dass das in den Figuren 1-7 dargestellte U-förmige Querschnittsprofil einem Schnitt durch den WC-Sitz mit auf Figur 8 senkrechter Schnittebene entspricht und die Lage des Einlaufkanals 7 und der Überlaufkanäle 9 in den Figuren 1-7 symbolisch dargestellt wurde.

Das für die eigentliche Benutzungsoberfläche verwendet Polyurea-Material (oder auch Polyurethan) hat hervorragende Eigenschaften hinsichtlich der optischen Erscheinung, der Dauerhaftigkeit, der Farbechtheit und der Unempfindlichkeit gegen Licht und Reinigungsmittel, Hautkontakt und kosmetische Chemikalien. Gleichzeitig hat die Unterschale 5 aus spritzgegossenem ASA eine sehr gute Formtreue und erfordert insbesondere keinen oder nur einen marginalen Nachbearbeitungsaufwand. Dabei ist die Sitzheizung 2 äußerst oberflächennah im obersten Bereich des WC-Sitzes untergebracht und eignet sich damit für eine energieeffiziente und reaktionsschnelle und präzise steuer- bzw. regelbare Betriebsweise. Die Energieeffizienz kann zum Beispiel auch beim Einsatz einer schnurlosen Energieübertragung zur Sitzheizung von besonderem Vorteil sein. Außerdem lassen sich relativ kleine Spannungen verwenden, was der Sicherheit zugutekommt bzw. Aufwand für Sicherheitsmaßnahmen verringert oder vermeidet.

Selbstverständlich können weitere Teile, insbesondere elektrische oder elektronische Bauteile, während der Herstellung integriert werden, insbesondere in der unteren Schale 5, und kann die U-förmige Querschnittsform genauso wie die Form in der Draufsicht der Figur 8 variiert werden.

Das Ausführungsbeispiel zeigt eine vorteilhafte Kombination zweier Herstellungsverfahren. Dabei ist das in der ersten Form durchgeführte Spritzgießen relativ schnell und bei größeren Stückzahlen auch ökonomisch. Andererseits erlaubt das Überfluten in der zweiten Form den Einsatz sehr vorteilhafter Materialien, die als Zweitkomponentenmaterialien (zuzüglich gegebenenfalls Farbstoff) dem Spritzgießen nicht zugänglich sind sondern aus sich heraus chemisch aushärten. Zusammen mit dem Spritzgießen ergibt sich dabei eine hervorragende Oberflächenqualität und können Klebe- oder Schweißfugen oder andere Trennkanten (wie etwa bei dem Zusammenfügen separat hergestellter Schalen) vermieden werden. Das Überfluten vermeidet außerdem einen wahrnehmbaren Folienrand am Rand der Sitzheizung.

## Patentansprüche

1. Verfahren zum Herstellen eines WC-Sitzes mit den folgenden Schritten:
- Vorsehen einer Sitzheizung (2),
- Einbringen der Sitzheizung (2) in eine erste Form (1, 3),
- Füllen der ersten Form (1, 3) auf einer ersten Seite der Sitzheizung (2) mit einem fließfähigen Material,
- Verfestigen des Materials zur Herstellung eines Verbundes aus der Sitzheizung (2) und dem verfestigten Material in der ersten Form (1, 3).

2. Verfahren nach Anspruch 1, bei dem die Sitzheizung (2) auf einer Trägerfolie, vorzugsweise aus ABS, in die erste Form (1, 3) eingebracht wird und vorzugsweise die Trägerfolie danach in der ersten Form (1, 3) und in dem hergestellten Verbund verbleibt.

3. Verfahren nach Anspruch 2, bei dem ein elektrischer Heizleiter der Sitzheizung (2) auf einer unteren Seite der Trägerfolie vorgesehen ist.

4. Verfahren nach einem der vorstehenden Ansprüche, bei dem die Sitzheizung (2) bei dem Füllen der ersten Form (1, 3) durch das fließfähige Material verformt wird.

5. Verfahren nach einem der vorstehenden Ansprüche, bei dem das Füllen der ersten Form (1, 3) mit dem und das Verfestigen des Materials in der ersten Form (1, 3) einem Spritzgussverfahren entspricht und das Material thermoplastisch, vorzugsweise ASA, ist.

6. Verfahren nach Anspruch 5 mit dem zusätzlichen Schritt:
- Überfluten des Verbundes auf einer zweiten Seite der Sitzheizung (2) in einer zweiten Form (3, 6) nach dem Verfestigen des Materials, wobei die zweite Form (3, 6) vorzugsweise geschlossen ist, wobei ein Überflutungsmaterial in einem fließfähigen Zustand verwendet wird und sich dann in der zweiten Form (3, 6) verfestigt.

7. Verfahren nach Anspruch 6, bei dem für das Überflutungsmaterial ein Zuströmkanal (7) zu der zweiten Form (3, 6) und ein Überlaufkanal (9) der zweiten Form verwendet werden, welche Kanäle (7, 9) in Bezug auf einen Querschnitt durch den WC-Sitz seitlich in den Hohlraum der zweiten Form (3, 6) münden, vorzugsweise an einem Ende des überfluteten Bereichs.

8. Verfahren nach Anspruch 6 oder 7, bei dem ein Teil (3) der zweiten Form (3, 6) schon als Teil der ersten Form (1, 3) verwendet wird.

9. Verfahren nach Anspruch 5, optional auch in Verbindung mit einem weiteren der vorstehenden Ansprüche, bei dem für das Zuströmen des thermoplastischen Materials ein Zuströmkanal (4) zu der ersten Form (1, 3) verwendet wird, der an einer unteren Seite in den Hohlraum der ersten Form (1, 3) mündet.

10. Verfahren zum Herstellen einer WC-Sitzgarnitur, bei welchem Verfahren gemäß einem der Ansprüche 1-9 ein WC-Sitz hergestellt wird und mit einem WC-Deckel verbunden wird.

11. Verfahren zum Herstellen eines WCs, bei welchem gemäß einem der Ansprüche 1-9 ein WC-Sitz hergestellt wird und der WC-Sitz mit einem WC-Körper verbunden wird, wobei vorzugsweise zunächst gemäß Anspruch 10 eine WC-Garnitur hergestellt und diese dann mit dem WC-Körper verbunden wird.
